# EUROPÄISCHE PATENTSCHRIFT

(11) **EP 1 721 512 B1**
(45) Veröffentlichungstag und Bekanntmachung des Hinweises auf die Patenterteilung: **28.05.2008**
(21) Anmeldenummer: 06113499.5
(22) Anmeldetag: 04.05.2006
(51) Int. Cl.: A01D 57/20

(54) **Schneidwerk mit Fördergurtzusammenbauten**
Cutting device with a belt conveyor assembly
Dispositif de coupe equipé d'un ensemble à bande transporteuse

(30) Priorität: 11.05.2005 DE 102005021766
(43) Veröffentlichungstag der Anmeldung: 15.11.2006
(73) Patentinhaber: Deere & Company, Moline, IL 61265-8098 (US)
(72) Erfinder: Kempf, Günter, 74238 Krautheim-Gommersdorf (DE); Zürn, Rolf, 74214 Schöntal-Westernhausen (DE); Stahl, Martin, 74238 Krautheim (DE)
(74) Vertreter: Holst, Sönke

(56) Entgegenhaltungen:
- EP-A- 1 495 665
- DE-A1-2102004 024 23
- DE-U1- 29 910 397
- US-A- 4 038 809

## Beschreibung

Die Erfindung betrifft ein Schneidwerk mit einem Rahmen, an dem eine sich quer zur Vorwärtsrichtung des Schneidwerks erstreckende Querförderschnecke befestigt ist, der in Vorwärtsrichtung mehrere seitlich nebeneinander angeordnete, mit Fördergurten ausgestattete Fördergurtzusammenbauten vorgeordnet sind, die im Erntebetrieb Erntegut nach hinten zur Querförderschnecke fördern, welche es wiederum quer zur Vorwärtsrichtung zur Mitte des Schneidwerks fördert, wobei zwischen benachbarten Fördergurtzusammenbauten eine Abdeckung zur Abdichtung der Innenräume der Fördergurtzusammenbauten vorhanden ist.

### Stand der Technik

Schneidwerke mit Fördergurten sind in der GB 1 501 639 A, GB 1 574 033 A und der GB 1 602 067 A beschrieben. Diese Schneidwerke weisen einen Rahmen mit einem Boden, Seitenwänden und einer Rückwand auf. Vor der Rückwand ist eine Querförderschnecke angeordnet. Zwischen einem Mähwerksbalken an der Vorderseite des Bodens und der Querförderschnecke befinden sich oberhalb des Bodens mehrere seitlich nebeneinander angeordnete Fördergurte, die um vordere und hintere Walzen umlaufen und das durch den Mähwerksbalken abgeschnittene Erntegut nach hinten zur Querförderschnecke transportieren, welche es dann in ihrem mittleren Bereich an den Schrägförderer eines Mähdreschers abgibt. Oberhalb des Mähwerksbalkens und der Fördergurte befindet sich eine rotierende Haspel, die das stehende Erntegut dem Mähwerksbalken zuführt. Zwischen den aneinander benachbarten seitlichen Kanten der Gurte verbleiben kleinere Spalte, die durch dachförmige Metallabdeckungen nach oben hin abgedeckt werden.

In der EP 1 495 665 A wird ein anderes Schneidwerk mit das Erntegut nach hinten transportierenden Fördergurten beschrieben, bei dem plattenförmige Abdeckungen die seitlichen Ränder der Fördergurte und die zwischen benachbarten Fördergurten verbleibenden Zwischenräume abdecken. Die Abdeckungen sollen verhindern, dass Erntegut oder andere Verunreinigungen in den Innenraum der Fördergurtzusammenbauten eindringen.

An der Rückseite der Fördergurte wird das Erntegut bei den beschriebenen Schneidwerken durch die Querförderschnecke quer zur Vorwärtsrichtung zur Mitte des Schneidwerks transportiert. Bei größeren Erntegutdurchsätzen wird das Erntegut von hinten an die Rückseiten der Fördergurte gedrückt, was zur unerwünschten Folge haben kann, dass gewisse Materialmengen zwischen dem bezüglich der Materialförderrichtung der Querförderschnecke stromauf liegenden Fördergurt und der Abdeckung hindurch in den Innenraum der Fördergurte gelangen und dort Beschädigungen verursachen.

In der DE 299 10 397 U wird ein Förderband zum Befördern von Schütt- und Stückgut beschrieben. Um zu verhindern, dass Schüttgutreste in den Innenraum des Förderbandes gelangen und dort das Förderband oder dessen Befestigungs- und Antriebselemente beeinträchtigen, wird vorgeschlagen, dass die seitlichen Enden des Förderbandes einen von der Oberfläche des Förderbandes herausragenden Vorsprung oder eine Verdickung aufweisen. Hier stellt sich jedoch nicht das Problem, dass das Transportgut abgabeseitig quer zur Förderrichtung transportiert wird, so dass der Fachmann keine Anregung bekommt, einen derartigen Vorsprung an einem Schneidwerk eingangs genannter Art zu verwenden.

### Aufgabe der Erfindung

Die der Erfindung zu Grunde liegende Aufgabe wird darin gesehen, ein Schneidwerk mit Fördergurtzusammenbauten bereitzustellen, bei dem ein Eindringen des Ernteguts in die Fördergurtzusammenbauten nicht oder in einem verringerten Maße zu befürchten ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den - bezüglich der Flussrichtung des durch die Querförderschnecke quer zur Vorwärtsrichtung transportierten Ernteguts - stromauf liegenden Fördergurt in seinem der Abdeckung unmittelbar benachbarten Bereich mit einer über die Abdeckung heraus ragenden Oberfläche zu versehen. Der stromauf liegende Fördergurt ist in seinem der Abdeckung benachbarten Bereich demnach weiter von der Drehachse der Walze, um die der Fördergurt umläuft, entfernt als der benachbarte Bereich der Abdeckung.

Auf diese Weise erreicht man, dass das Erntegut in einem hinreichenden Abstand von der stromauf liegenden Kante der Abdeckung entlang strömt. Ein Eindringen des Ernteguts in den Innenraum der Fördergurtzusammenbauten ist nicht oder nur in wesentlich geringerem Maße zu erwarten.

In an sich bekannter Weise bietet es sich an, dass die Abdeckung den stromab liegenden Fördergurt nach außen hin randseitig überdeckt. An dieser Stelle ist ein Eindringen von Erntegut in den Innenraum der Fördergurtzusammenbauten nicht zu befürchten.

Wie erwähnt, ragt der stromab liegende Fördergurt in seinem der Abdeckung benachbartem Bereich nach außen über die Abdeckung hinaus. Im Rahmen des erfindungsgemäßen Gedankens bestehen unterschiedliche Möglichkeiten, diese räumliche Anordnung zu realisieren. In einer ersten Ausführungsform ist der stromauf liegende Fördergurt in seinem der Abdeckung benachbarten Bereich mit einer nach außen überstehenden Verdickung versehen. An der Verdickung wird das Material nach außen abgelenkt und kann nicht in den Spalt zwischen dem Fördergurt und der Abdeckung eindringen. Der Querschnitt der Verdickung ist beliebig, z. B. rechteckig. Als besonders geeignet hat sich ein keilförmiger, sich in Flussrichtung nach außen erweiternder Querschnitt der Verdickung erwiesen, da das Erntegut sukzessive abgelenkt wird. Außerdem vermeidet man, dass sich an der Verdickung Material ansammelt, wie es an nach außen ragenden Kanten der Fall sein könnte.

Bei einer anderen, möglichen Ausführungsform hat die Abdeckung einen gegenüber dem benachbarten Bereich des stromauf liegenden Fördergurts nach innen versetzten Abschnitt. Hier wird der Versatz demnach durch eine geeignete Form der Abdeckung realisiert, die sich zwischen ihrem nach innen versetzten Abschnitt und dem stromab liegenden Fördergurt wieder nach außen erweitern kann. Diese Ausführungsform kann auch mit einem mit einer nach außen über den Fördergurt hinaus ragenden Verdickung kombiniert werden. Es wäre auch möglich, sich die Abdeckung bis an die Innenseite des stromauf liegenden Fördergurts erstrecken zu lassen.

Die Abdeckung und der über sie hinaus ragende Bereich des stromauf liegenden Fördergurts befinden sich zweckmäßigerweise an der Rückseite der Fördergurtzusammenbauten, da dort aufgrund des mit der Querförderschnecke in seitlicher Richtung transportierten Ernteguts eine besonders sichere Abdichtung sinnvoll erscheint. Allerdings kann auch die Unter- und/oder Oberseite des Fördergurts in der beschriebenen Weise abgedichtet werden.

### Ausführungsbeispiele

In den Zeichnungen sind zwei nachfolgend näher beschriebene Ausführungsbeispiele der Erfindung dargestellt. Es zeigt:
- Fig. 1: eine schematische Seitenansicht einer Erntemaschine mit einem Schneidwerk mit Fördergurtzusammenbauten,
- Fig. 2: eine Draufsicht auf das Schneidwerk,
- Fig. 3: eine Draufsicht auf einen Fördergurtzusammenbau,
- Fig. 4: eine rückwärtige Ansicht einer ersten Ausführungsform zweier benachbarter Fördergurtzusammenbauten,
- Fig. 5: einen vergrößerten Ausschnitt aus der Figur 4,
- Fig. 6: eine rückwärtige Ansicht einer zweiten Ausführungsform zweier benachbarter Fördergurtzusammenbauten, und
- Fig. 7: einen vergrößerten Ausschnitt aus der Figur 6.

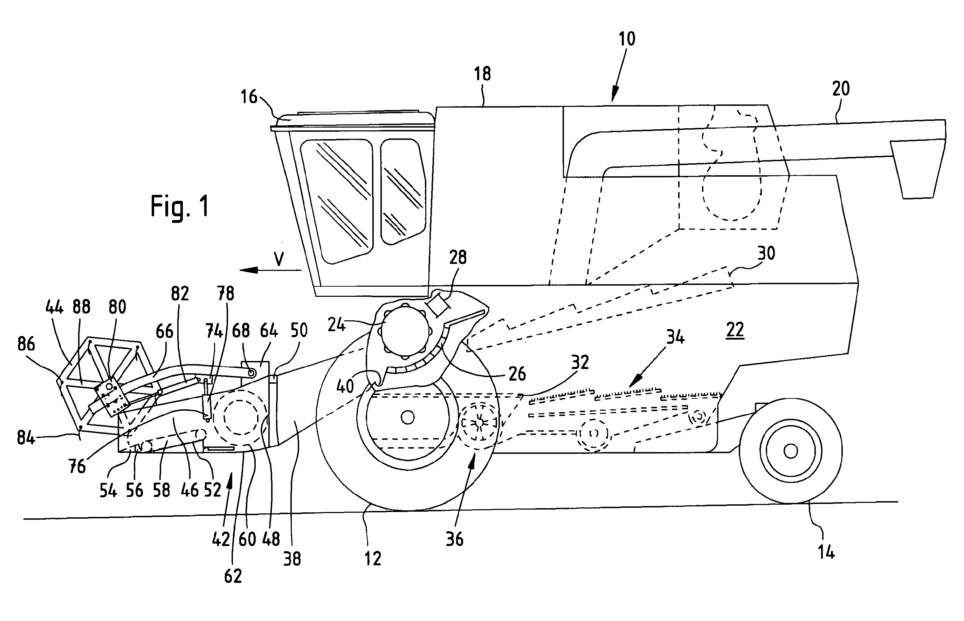

Eine in der Figur 1 gezeigte Erntemaschine 10 in der Form eines Mähdreschers wird auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer Erntegutaufnahmevorrichtung in Form eines Schneidwerks 42 vom Boden aufgenommen worden ist. Den nachfolgenden Ausführungen ist voranzustellen, dass sich Richtungsangaben, wie vor, hinter, oberhalb und unterhalb, im Folgenden auf die Vorwärtsrichtung V der Erntemaschine 10 beziehen.

Das Schneidwerk 42 umfasst einen Rahmen, der sich aus Seitenwänden 46, einer Rückwand 48 mit einem an ihrer Oberseite angeordneten Querträger 50 und einem Boden 52 zusammensetzt. Der mittlere Bereich des Querträgers 50 wird durch geeignete Mittel, z. B. Haken, lösbar am Schrägförderer 38 angehängt. An der Vorderseite des Bodens 52 ist ein Messerbalken 54 mit sich hin- und herbewegenden Messern angeordnet. In Vorwärtsrichtung V hinter dem Messerbalken 54 befindet sich eine über die Breite des Schneidwerks 42 erstreckende, nach hinten geringfügig abfallende Rampe 56. An der Vorderseite der Seitenwände 46 können Seitenspitzen oder Seitenschneidwerke angebracht werden.

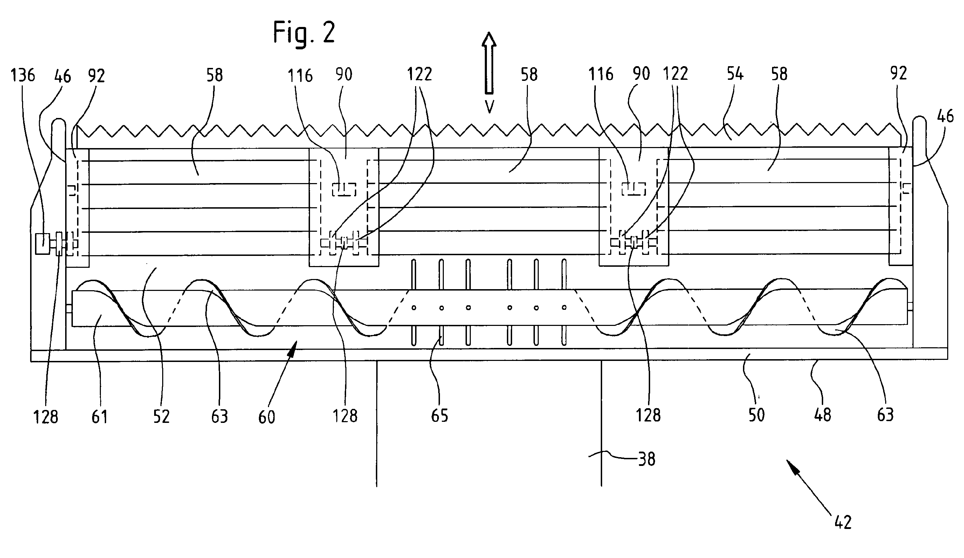

Hinter der Rampe 56 folgen mehrere seitlich nebeneinander angeordnete Fördergurtzusammenbauten 58 mit sich entgegen der Vorwärtsrichtung V nach hinten erstreckender Förderrichtung, hinter denen eine sich quer zur Vorwärtsrichtung V erstreckende Querförderschnecke 60 vorgesehen ist, die sich aus einem Rohr 61 mit daran angeschweißten Förderwendeln 63 und in ihrem mittleren Bereich vorgesehenen gesteuerten Einzugsfingern 65 aufbaut (s. Figur 2). Die Fördergurtzusammenbauten 58 steigen nach hinten geringfügig an. An ihrer Unterseite befinden sich in ihrer Form an die Fördergurtzusammenbauten 58 und die Querförderschnecke 60 angepasste Bodenbleche 52.

Oberhalb des Messerbalkens 54 und der Fördergurtzusammenbauten 58 befindet sich eine höhenverstell- und in Vorwärtsrichtung verschiebbar am Rahmen angebrachte, antreibbare Haspel 44, die sich quer zur Vorwärtsrichtung V erstreckt. An beiden seitlichen Enden des Rahmens des Schneidwerks 42 ist oberhalb und vor dem Querträger 50 jeweils eine Konsole 64 angeschweißt, an der je ein Haspelträgerarm 66 um eine horizontal und quer zur Vorwärtsrichtung V erstreckende Achse 68 schwenkbar gelagert ist. Zum Verschwenken des Haspelträgerarms 66 um die Achse 68 erstreckt sich ein Vertikalverstellantrieb 78 in Form eines Hydraulikzylinders zwischen einer an der Seitenwand 46 angebrachten Halterung 76 und einer unterhalb der ersten Biegung 70 am Haspelträgerarm 66 angeschweißten Konsole 74.

Die Haspel 44 ist an ihren beiden Enden drehbar an einer Haspelhalterung 80 gelagert. Die Haspelhalterung 80 ist ihrerseits verschiebbar am jeweiligen Haspelträgerarm 72 abgestützt. Ein Horizontalverstellantrieb 82 in Form eines Hydraulikzylinders erstreckt sich zwischen der Haspelhalterung 80 und der Konsole 74.

Durch einen in den Figuren nicht dargestellten Hydromotor, der vorzugsweise an ihrem in Vorwärtsrichtung rechts befindlichen Ende angeordnet ist, kann die Haspel 44 um ihre Längsachse in Rotation versetzt werden. Sie dreht sich im Erntebetrieb, betrachtet man die Figur 1, im Gegenuhrzeigersinn.

Die Haspel ist mit sechs an Tragsternen 88 befestigten Zinkenträgern 86 ausgestattet, die jeweils nebeneinander angeordnete Zinken 84 tragen. Durch übliche Steuerungsmechanismen wird die Stellung der Zinkenträger und der Zinken 84 während der Umdrehung der Haspel 44 variiert, so dass sich die Zinken 84 stets näherungsweise von den Zinkenträgern nach unten und geringfügig nach hinten erstrecken. Die Stellung der Zinken 84 ist vorzugsweise einstellbar.

Oberhalb der Zwischenbereiche zwischen den Fördergurtzusammenbauten 58 sind Abdeckungen 90 angeordnet. Ähnliche Abdeckungen 92 befinden sich auch zwischen den Seitenwänden 46 und den außen angeordneten Fördergurtzusammenbauten 58. Die Abdeckungen 90, 92 sind lösbar befestigt, vorzugsweise durch Schraubbolzen. Sie vermeiden Ansammlungen von Erntegut und anderen Verunreinigungen im Innenraum der Fördergurtzusammenbauten 58.

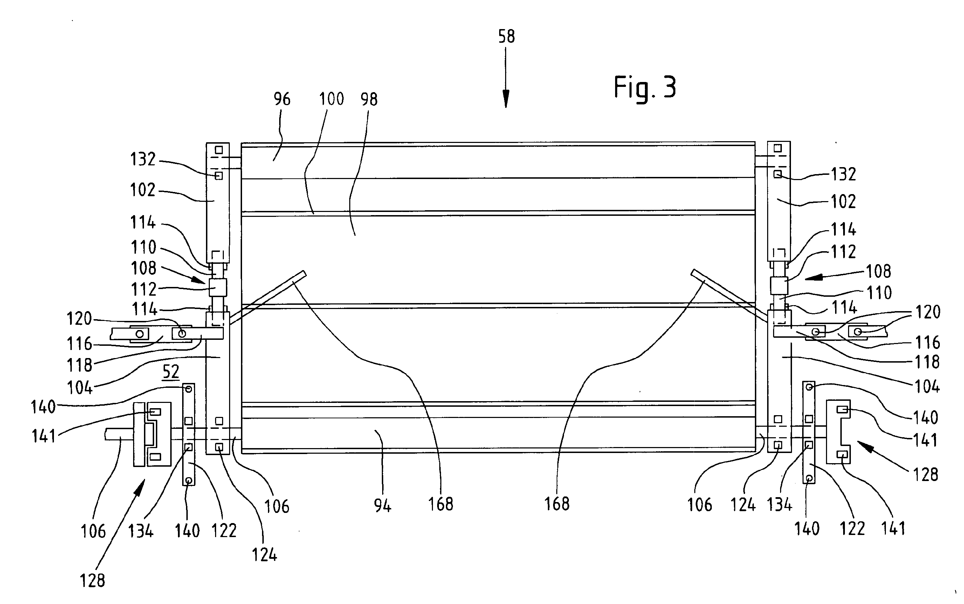

Die Figur 3 zeigt einen einzelnen Fördergurtzusammenbau 58 detaillierter. Er umfasst eine erste, hintere kreiszylindrische Walze 94 und eine zweite, vordere kreiszylindrische Walze 96, um die ein endloser Fördergurt 98 umläuft, der mit nach außen überstehenden Mitnehmern 100 mit rechteckigem Querschnitt ausgestattet ist. In der dargestellten Ausführungsform ist die Oberfläche zwischen den Mitnehmern 100 glatt. Bei anderen Ausführungsformen könnten auch andere Oberflächen, z. B. aufgerauhte oder in sich gewellte, und andere Querschnittsformen und Abstände der Mitnehmer 100 gewählt werden. Der Fördergurt 98 besteht aus in sich flexiblem Material, wie Gummi oder geeignetem Kunststoff.

Der Fördergurtzusammenbau 58 umfasst weiterhin einen Halterahmen, der sich aus jeweils zwei vorderen Halteelementen 102 und zwei hinteren Halteelementen 104 zusammensetzt. Die vordere Walze 96 ist an ihren beiden Enden jeweils in einem vorderen Halteelement 102 drehbar gelagert. Analog ist die hintere Walze 94 an ihren beiden Enden mit je einer Welle 106 ausgestattet, die sich durch die beiden hinteren Halteelemente 104 erstreckt und darin drehbar gelagert ist. Die Welle 106 kann durchgehend sein, d. h. die Walze 94 ist auf die Welle 106 aufgeschoben, oder nur aus endseitigen Stummeln bestehen, die sich nur bis zu Endscheiben erstrecken, an denen sich die hohle Walze 94 abstützt. Die Lagerung der vorderen Walze 96 am vorderen Halteelement 102 erfolgt durch Wälzlager 132 und die der Welle 106 der hinteren Walze 96 am hinteren Halteelement 104 durch Wälzlager 124.

Die vorderen Halteelemente 102 sind jeweils durch eine Verstellmechanik 108 mit den hinteren Halteelementen 104 verbunden, um die Spannung des Fördergurts 94 einstellen zu können und einen geraden Lauf des Fördergurts 94 zu erzielen. Die Verstellmechanik 108 umfasst jeweils eine Gewindestange 110 mit gegenläufigen Gewinden, die sich jeweils in ein Gewindeloch in den Halteelementen 102, 104 erstrecken. Ein an ihr starr angebrachter Sechskant 112 ermöglicht ein Drehen der Gewindestange 110 und somit ein Auseinander- oder Zusammenziehen der Halteelemente 102, 104. Kontermuttern 114 erlauben ein Fixieren der Gewindestange 110 an den Halteelementen 102, 104, so dass eine starre Befestigung der Halteelemente 102, 104 aneinander möglich ist. Es wäre denkbar, die Verstellmechanik 108 mit einer Abdichtung der Halteelemente 102, 104 zu versehen, die ein Labyrinth umfasst.

In der Regel sind die beiden vorderen Halteelemente 102 untereinander durch eine Querstrebe verbunden, die in der Figur 3 nicht eingezeichnet ist. Eine andere Querstrebe verbindet vorzugsweise auch die beiden hinteren Halteelemente 104 des Fördergurtzusammenbaus 58.

Die Abstützung der Halteelemente 102, 104 am Rahmen des Schneidwerks 42 erfolgt an vier Stellen. In Vorwärtsrichtung V betrachtet ist etwa in der Mitte des Fördergurtzusammenbaus 58 ein vorderer Halteblock 116 zwischen zwei benachbarten Fördergurtzusammenbauten 58 bzw. zwischen einer Seitenwand 46 und dem daneben angeordneten Fördergurtzusammenbau 58 am Rahmen befestigt. Eine an der Oberseite des hinteren Halteelements 104 fixierte Strebe 118 erstreckt sich davon seitlich nach außen und liegt an der Oberseite des vorderen Halteblocks 116 an, wo sie durch eine Schraube 120 lösbar befestigt ist.

Weiterhin sind sich in Vorwärtsrichtung V erstreckende hintere Halteblöcke 122 in der Nähe des hinteren Endes der hinteren Halteelemente 104 am Rahmen 52 befestigt. Die Wellen 106 der hinteren Walzen 94 erstrecken sich durch die Wälzlager 124, die in entsprechenden Öffnungen in den hinteren Halteelementen 104 angeordnet sind, und sind weiterhin in Wälzlagern 134 gelagert, die sich in zugehörigen Öffnungen in den hinteren Halteblöcken 122 befinden. Die Wellen 106 erstrecken sich über die hinteren Halteblöcke 122 hinaus nach außen. Die Befestigung der hinteren Halteelemente 104 am Rahmen 52 erfolgt über die Wälzlager 124, die Welle 106, die Wälzlager 134 und schließlich die Halteblöcke 122.

Die hinteren Halteelemente 104 sind auf diese Weise durch die Wälzlager 134 auf der Welle 106 um deren Längsachse drehbar gelagert, was es nach dem Abnehmen der Schrauben 120 von den vorderen Halteblöcken 116 ermöglicht, den Fördergurtzusammenbau 58 insgesamt um die Drehachse der Wellen 106 nach oben zu verschwenken. Zuvor sind die benachbarten Abdeckungen 90, 92 abzunehmen, indem Schrauben entfernt werden, die die Abdeckungen 90, 92 an den Halteblöcken 116, 122 und der Rampe 56 halten. Bei hochgeschwenkten Fördergurtzusammenbauten 58 sind Reinigungs- und Wartungsarbeiten wesentlich erleichtert.

Der Antrieb der Fördergurte 98 erfolgt über ein Zahnrad 136, das von der Erntemaschine 10 her mechanisch angetrieben wird. Das Zahnrad 136 treibt die hintere Walze 94 des linken Fördergurtzusammenbaus 58 über eine Klauenkupplung 128 und die linke Welle 106 dieses Fördergurtzusammenbaus 58 an. Die hintere Walze 94 des linken Fördergurtzusammenbaus 58 treibt wiederum über ihre andere Welle 106 und eine weitere Klauenkupplung 128 die linke Welle 106 des mittleren Fördergurtzusammenbaus 58 an, der in derselben Weise wiederum mit dem rechten Fördergurtzusammenbau 58 in Antriebsverbindung steht. Die Klauenkupplungen 128 umfassen je zwei Hälften, die jeweils mit Klauen versehen sind, die zwischen Klauen der anderen Hälfte eingreifen. Zwischen den Klauen der Hälften sind Dämpfungselemente 141 aus in sich elastischem Material angeordnet, um Antriebsmomentspitzen ausgleichen zu können, beispielsweise beim Anlaufen.

An der Innenseite des oberen Trums der Fördergurte 98 liegen endseitig jeweils Abstreifer 168 (s. Figur 3) an, die Verunreinigungen vom Fördergurt 98 entfernen und nach außen abgeben.

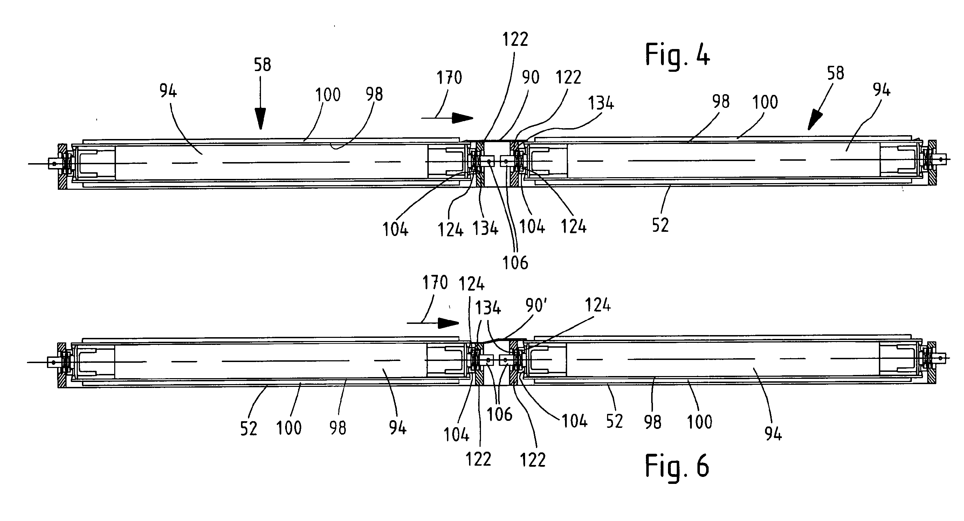

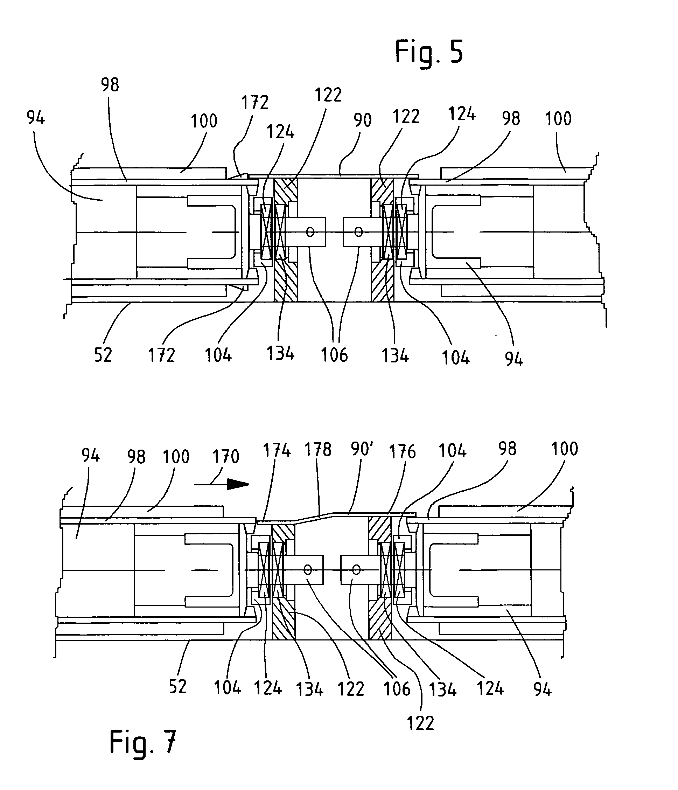

In der Figur 4 sind zwei benachbarte, in der Figur 2 links und mittig eingezeichnete Fördergurtzusammenbauten 58 in einer rückwärtigen Ansicht dargestellt. Die Figur 5 zeigt einen vergrößerten Ausschnitt der Figur 4. Das Erntegut wird durch die Querförderschnecke 60 in Richtung des Pfeils 170 transportiert. Zwischen den in der Figur 2 rechts und mittig eingezeichneten Fördergurtzusammenbauten 58 findet sich eine zu den Figuren 4 und 5 symmetrisch angeordnete Dichtungsanordnung.

Um zu verhindern, dass Erntegut in den Spalt zwischen dem stromauf liegenden, in der Figur 5 links eingezeichneten Fördergurt 98 und der Abdeckung 90 eindringt und im Innenraum der Fördergurtzusammenbauten 58 Schäden anrichtet, ist der stromauf liegende Fördergurt 98 mit einer Verdickung 172 versehen, die sich in Flussrichtung des Ernteguts zwischen den Mitnehmern 100 und der Abdeckung 90 befindet. Die Verdickung 172 hat einen dreieckigen Querschnitt und erweitert sich in der durch den Pfeil 170 gekennzeichneten Flussrichtung keilförmig nach außen. Die in Flussrichtung folgende Abdeckung 90 schließt unmittelbar an die Verdickung 172 an und überdeckt den in Flussrichtung folgenden Endbereich des Fördergurts 98 nach oben. Die Abdeckung 90 umschließt das obere Trum der Fördergurte 98 von oben und die rückwärtigen, der Querförderschnecke 60 zugewandten Bereiche des Fördergurts 98 halbkreisförmig.

Die nach außen (d. h. oben und hinten) über die benachbarte Abdeckung 90 heraus ragende Oberfläche der Verdickung 172 bewirkt, dass das Erntegut nach außen abgelenkt wird und nicht in den Spalt zwischen der Abdeckung 90 und dem Fördergurt 98 eindringen kann.

Die Abdeckung 90 überdeckt auch den stromauf liegenden Endbereich des Fördergurts 98 des in der Figur 5 rechts eingezeichneten, stromab liegenden Fördergurtzusammenbaus 58. Dort ist ein Eindringen des Ernteguts in den Innenraum der Fördergurtzusammenbauten 58 nicht zu befürchten, weil es keinen in Flussrichtung des Ernteguts offenen Spalt zwischen der Abdeckung 90 und dem Fördergurt 98 gibt.

Die Figuren 6 und 7 zeigen eine rückwärtige Ansicht einer zweiten Ausführungsform von Fördergurtzusammenbauten 58. Mit der ersten Ausführungsform übereinstimmende Elemente sind mit denselben Bezugszeichen gekennzeichnet.

Die zweite Ausführungsform unterscheidet sich von der ersten Ausführungsform (Figur 4 und 5) durch eine andere Form der Abdeckung 90', die einen stromauf liegenden Abschnitt 174, einen stromab liegenden Abschnitt 176 und einen dazwischen liegenden Übergangsabschnitt 178 umfasst.

Der stromauf liegende Abschnitt 174 der Abdeckung 90' ist gegenüber dem benachbarten Bereich des zu ihm stromauf liegenden Fördergurts 98 nach innen versetzt, so dass der Fördergurt 98 nach außen (d. h. oben und hinten) über den Abschnitt 174 hinaus ragt, was das Eindringen von Erntegut in den Spalt zwischen der Abdeckung 90' und dem Fördergurt 98 erschwert. Der in der Figur 7 links eingezeichnete Halteblock 122 ist gegenüber dem anderen Halteblock 122 niedriger gestaltet, um den Versatz zwischen dem Fördergurt 98 und dem Abschnitt 174 der Abdeckung 90' zu ermöglichen. Im Übergangsabschnitt 178 erstreckt sich die Abdeckung 90' in der durch den Pfeil 170 angegebenen Flussrichtung des Ernteguts schräg nach oben, während sie im stromab gelegenen Bereich horizontal orientiert ist und endseitig den Fördergurt 98 des stromab gelegenen Fördergurtzusammenbaus 58 von außen her überdeckt. Auch hier umschließt die Abdeckung 90' in der in Figur 7 dargestellten Weise das obere Trum der Fördergurte 98 von oben und die rückwärtigen, der Querförderschnecke 60 zugewandten Bereiche des Fördergurts 98 halbkreisförmig.

## Patentansprüche

1. Schneidwerk (42) mit einem Rahmen, an dem eine sich quer zur Vorwärtsrichtung des Schneidwerks (42) erstreckende Querförderschnecke (60) befestigt ist, der in Vorwärtsrichtung mehrere seitlich nebeneinander angeordnete, mit Fördergurten (98) ausgestattete Fördergurtzusammenbauten (58) vorgeordnet sind, die im Erntebetrieb Erntegut nach hinten zur Querförderschnecke (60) fördern, welche es wiederum quer zur Vorwärtsrichtung zur Mitte des Schneidwerks (42) fördert, wobei zwischen benachbarten Fördergurtzusammenbauten (58) eine Abdeckung (90, 90') zur Abdichtung der Innenräume der Fördergurtzusammenbauten (58) vorhanden ist, **dadurch gekennzeichnet, dass** ein bezüglich des quer zur Vorwärtsrichtung transportierten Ernteguts stromauf einer Abdeckung (90, 90') liegendem Fördergurt (98) in einem der Abdeckung (90, 90') unmittelbar benachbarten Bereich über die benachbarte Abdeckung (90, 90') heraus ragt, derart, dass das Erntegut in einem hinreichenden Abstand von der stromauf liegenden Kante der Abdeckung entlang strömt, so dass ein Eindringen des Ernteguts in den Innenraum der Fördergurtzusammenbauten (58) nicht oder nur in wesentlich geringerem Maße zu erwarten ist.

2. Schneidwerk (42) nach Anspruch 1, **dadurch gekennzeichnet, dass** die Abdeckung (90, 90') den stromab liegenden Fördergurt (98) nach außen hin randseitig überdeckt.

3. Schneidwerk (42) nach Anspruch 1 oder 2, **dadurch gekennzeichnet, dass** der stromauf liegende Fördergurt (98) in seinem der Abdeckung (90) benachbarten Bereich mit einer nach außen überstehenden Verdickung (172) versehen ist.

4. Schneidwerk (42) nach Anspruch 3, **dadurch gekennzeichnet, dass** die Verdickung (172) einen keilförmigen, sich in Flussrichtung nach außen erweiternden Querschnitt hat.

5. Schneidwerk (42) nach Anspruch 1 oder 2, **dadurch gekennzeichnet, dass** die Abdeckung (90') einen gegenüber dem der Abdeckung benachbarten Bereich des stromauf liegendem Fördergurts nach innen versetzten Abschnitt (174) umfasst.

6. Schneidwerk (42) nach Anspruch 5, **dadurch gekennzeichnet, dass** die Abdeckung (90') sich zwischen ihrem nach innen versetzten Abschnitt (174) und dem stromab liegenden Fördergurt nach außen erweitert.

7. Schneidwerk (42) nach einem der Ansprüche 1 bis 6, **dadurch gekennzeichnet, dass** die Abdeckung (90, 90') sich an der Rückseite und/oder Oberseite und/oder Unterseite der Fördergurtzusammenbauten (58) erstreckt.

## Claims

1. Cutting device (42) with a frame to which a transverse conveyor worm (60) is fastened, said transverse conveyor worm extending transversely with respect to the forward direction of the cutting device (42) and having arranged in front of it, in the forward direction, a plurality of belt conveyor assemblies (58) which are arranged laterally next to one another, are equipped with belt conveyors (98) and, in the harvesting mode, convey crop to the rear to the transverse conveyor worm (60) which in turn conveys it transversely with respect to the forward direction to the centre of the cutting device (42), with there being a covering (90, 90') between adjacent belt conveyor assemblies (58) in order to seal the interior spaces of the belt conveyor assemblies (58), **characterized in that** a belt conveyor (98) which lies upstream of a covering (90, 90') with respect to the crop transported transversely with respect to the forward direction projects over the adjacent covering (90, 90'), in a region directly adjacent to the covering (90, 90'), in such a manner that the crop flows along at a sufficient distance from that edge of the covering which is situated upstream, and therefore penetration of the crop into the interior space of the belt conveyor assemblies (58) is not to be expected or only to a substantially lower extent.

2. Cutting device (42) according to Claim 1, **characterized in that** the covering (90, 90') outwardly covers the edge of the belt conveyor (98) situated downstream.

3. Cutting device (42) according to Claim 1 or 2, **characterized in that** the belt conveyor (98) which is situated upstream is provided, in its region adjacent to the covering (90), with an outwardly protruding thickened portion (172).

4. Cutting device (42) according to Claim 3, **characterized in that** the thickened portion (172) has a wedge-shaped cross section which widens outwards in the direction of flow.

5. Cutting device (42) according to Claim 1 or 2, **characterized in that** the covering (90') comprises a section (174) which is offset inwards in relation to the region, which is adjacent to the covering, of the belt conveyor which is situated upstream.

6. Cutting device (42) according to Claim 5, **characterized in that** the covering (90') widens outwards between its inwardly offset section (174) and the belt conveyor which is located downstream.

7. Cutting device (42) according to one of Claims 1 to 6, **characterized in that** the covering (90, 90') extends on the rear side and/or upper side and/or lower side of the belt conveyor assemblies (58).

## Revendications

1. Barre de coupe (42), comportant un châssis, sur lequel est fixée une vis de transport transversale, qui est orientée transversalement à la direction d'avance de la barre de coupe (42) et en amont de laquelle, dans la direction d'avance, sont montés plusieurs systèmes (58), qui sont disposés côte à côte et sont équipés de bandes transporteuses (98) et qui, en cours de service, transportent les végétaux récoltés vers l'arrière vers la vis de transport transversale (60), laquelle transporte alors la masse végétale transversalement à la direction d'avance vers le milieu de la barre de coupe (42), un cache (90, 90') étant disposé entre des systèmes de bandes transporteuses (58) adjacents en vue d'étancher les espaces intérieurs des systèmes de bandes transporteuses (58), **caractérisée en ce qu'**une bande transporteuse (98), située, par référence à la masse végétale transportée transversalement à la direction d'avance, en amont d'un cache (90, 90') dans une zone directement adjacente au cache (90, 90'), s'avance vers l'extérieur au-delà du cache (90, 90') adjacent, de telle sorte que la masse végétale afflue le long du cache à une distance suffisante du bord amont du cache, de telle sorte que la masse végétale ne peut pas ou seulement dans une faible mesure pénétrer dans l'espace intérieur des systèmes de bandes transporteuses (58).

2. Barre de coupe (42) selon la revendication 1, **caractérisée en ce que** le cache (90, 90') recouvre vers l'extérieur du côté du bord la bande transporteuse (98) située en aval.

3. Barre de coupe (42) selon la revendication 1 ou 2, **caractérisée en ce que** la bande transporteuse (98) située en amont est munie d'un renflement (172), en saillie vers l'extérieur, dans la zone adjacente au cache (90).

4. Barre de coupe (42) selon la revendication 3, **caractérisée en ce que** le renflement (172) a une section en forme de clavette, s'élargissant vers l'extérieur dans le sens du flux.

5. Barre de coupe (42) selon la revendication 1 ou 2, **caractérisée en ce que** le cache (90') comporte une partie (174) décalée vers l'intérieur par rapport à la zone, adjacente au cache, de la bande transporteuse située en amont.

6. Barre de coupe (42) selon la revendication 5, **caractérisée en ce que** le cache (90') s'élargit vers l'extérieur entre sa partie (174) décalée vers l'intérieur et la bande transporteuse située en aval.

7. Barre de coupe (42) selon l'une quelconque des revendications 1 à 6, **caractérisée en ce que** le cache (90, 90') s'étend au niveau du côté arrière et/ou du côté supérieur et/ou du côté inférieur des systèmes de bandes transporteuses (58).
